# EUROPEAN PATENT SPECIFICATION

(11) **EP 2 682 226 B1**
(45) Date of publication and mention of the grant of the patent: **13.08.2014**
(21) Application number: 13174740.4
(22) Date of filing: 02.07.2013
(51) Int. Cl.: B23Q 3/08, B23Q 3/18, B23Q 16/00, B25B 11/00

(54) **Unit for locating in position plates of glass, marble, stone, wood, wood derivatives or the like on the work board of a machine for working the aforesaid plates, and machine provided with this unit**
Einheit zur Positionierung von Platten aus Glas, Marmor, Stein, Holz, Holzderivate oder dergleichen auf der Arbeitsplatte einer Maschine zur Bearbeitung dieser Platten und Maschine mit dieser Einheit
Unité pour localiser en position des plaques de verre, marbre, pierre, bois, de matériaux dérivés du bois ou similaires sur la planche de travail d'une machine pour travailler les plaques précitées, et machine équipée de cette unité

(30) Priority: 05.07.2012 IT TO20120593
(43) Date of publication of application: 08.01.2014
(73) Proprietor: Biesse S.p.A., 61122 Chiusa di Ginestreto (Pesaro Urbino) (IT)
(72) Inventor: Belli, Marco, I-61100 Saltara (Pesaro Urbino) (IT); Bindelli, Filippo, I-61100 Pesaro (IT)
(74) Representative: Notaro, Giancarlo

(56) References cited:
- WO-A1-2012/085446
- US-A- 5 562 276
- US-A1- 2012 049 430

## Description

The present invention relates to machines for machining plates of glass, marble, stone, wood, wood derivatives, or the like.

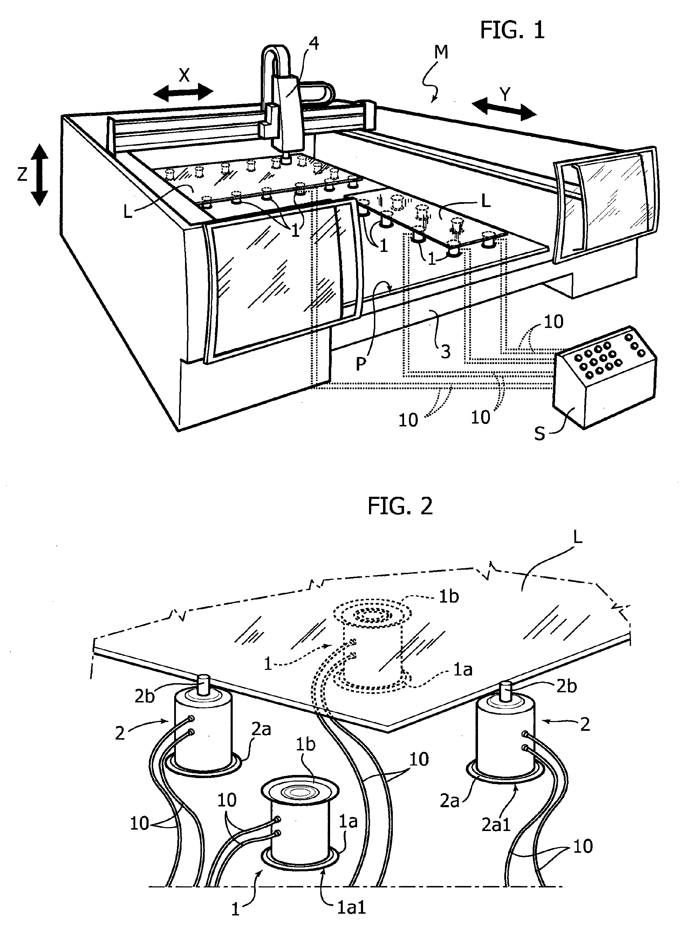

With reference to Figures 1 and 2, which regard the prior art, it is known to use suction-pad supporting units 1, which can be positioned on the working surface P for treating the plate L present on the surface itself during machining. The suction-pad supporting units 1 are constituted by independent blocks, which can be positioned, as desired, on the working surface P, according to the original size and shape of the plate to be machined and the size and shape that it is desired to obtain. Each supporting unit 1 is provided with a bottom suction-pad member 1a and a top suction-pad member 1b. The bottom suction-pad member 1a and the top suction-pad member 1b define, with the working surface P and with the surface of the plate L, respective chambers that can be set in communication with a source of vacuum S through a flexible connection hose 10 associated to each block. In this way, each suction-pad member provides for blocking of the unit 1 on the working surface P and for blocking of the plate L to be machined on the unit 1. Furthermore, for correct positioning of the plates L to be machined on the working surface P there are also available units 2 for locating the plates, against which the edges of the plates come to bear. The units 2 are equipped with retractable top locator members 2b and bottom suction-pad members 2a for blocking the units 2 on the working surface P. Also the bottom suction-pad members of the units 2 can be connected to a source of vacuum S to obtain anchorage of the units 2 to the working surface P.

The invention is designed in particular to be applied on machines M or work centres of the type comprising a workbench 3 (see Figure 1) defining the aforesaid working surface P, on which the plate to be machined L is located in position and fixed via the aforesaid units 2 and 1, and an operating head 4, which can be displaced on the workbench 3 along a number of mutually orthogonal axes (X, Y, Z) by means of respective electronically controlled motor means (not illustrated and not described in detail herein since they are in themselves known).

The main advantage of the above known solution lies in the fact that each supporting and/or locating unit can be positioned and withheld on the working surface in any point thereof, since the hoses that supply the vacuum enable easy displacement of each block into the desired position.

The disadvantage of the known solution described lies, instead, mainly in the fact that the flexible hoses 10 constitute an encumbrance on the working surface P that proves at times troublesome for the operator, who has to position the suction-pad supporting units 1 and the locating units 2 between the various hoses 10.

It has already been proposed to provide a source of vacuum within each unit for supporting and withholding the plates (see the document No. WO 2012/085446 A1) in such a way that the hoses for connection to the external source of vacuum are eliminated. However, so far it has not been possible to apply this arrangement in an equally advantageous way to the units for locating the plates, where in addition to the problem of anchorage to the working surface there also exists the problem of governing the top mobile member that functions as locating element.

A unit for locating the plates having the characteristics specified in the preamble of Claim 1 is known from the document No. US-A-5,562,276.

The object of the present invention is to provide a new solution for the units for locating the plates on the working surface of a machine of the type specified above that will overcome the inconvenience and the encumbrance of the flexible hoses and that at the same time will solve in a simple and efficient way also the problem of governing the top mobile member of each locating unit.

A further object of the invention is to provide a machine for machining plates of the type specified above, in which it is possible to position, in an easy and fast way, the units for locating the plates and preferably also the units for supporting the plates, without being hindered in this task by any undesirable encumbrance.

With a view to achieving the above object, the subject of the invention is a unit for locating plates having the characteristics specified in Claim 1.

Further preferred and advantageous characteristics of the above unit are specified in the dependent claims.

The invention also regards a machine for machining plates according to Claim 10. Preferably, the machine according to the invention is also equipped with units for supporting the plates as specified in Claim 11 and in the claims depending thereon.

Further characteristics and advantages of the present invention will emerge from the ensuing description with reference to the annexed drawings, which are provided purely by way of non-limiting example and in which:
- Figure 1 is an overall view of a work centre for automated machining of plates of glass, according to the known art;
- Figure 2 is a view at an enlarged scale of a detail of Figure 1, in which the units for supporting locating the plates are more clearly visible;
- Figure 3 is a schematic cross-sectional view of a supporting unit, which is preferably provided in the machine according to the present invention, in addition to the units for locating the plates according to the invention;
- Figure 4 is a schematic cross-sectional view of a different embodiment of the supporting unit of Figure 3,
- Figure 5 is a schematic cross-sectional view of a unit for locating the plates according to the present invention; and
- Figure 6 illustrates the portion of the machine or work centre according to the invention arranged in which is the magazine for charging the batteries of the units.

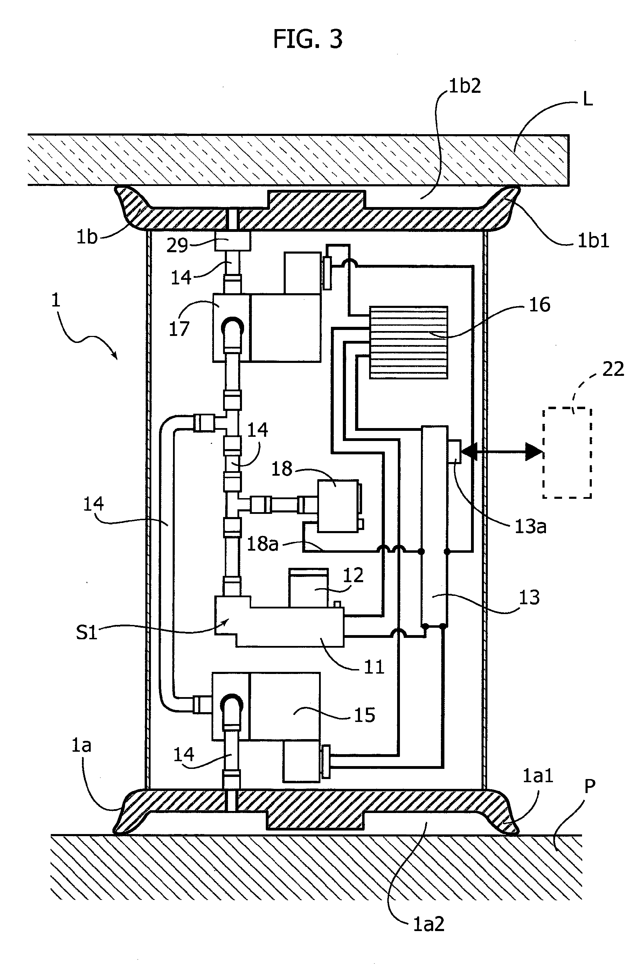

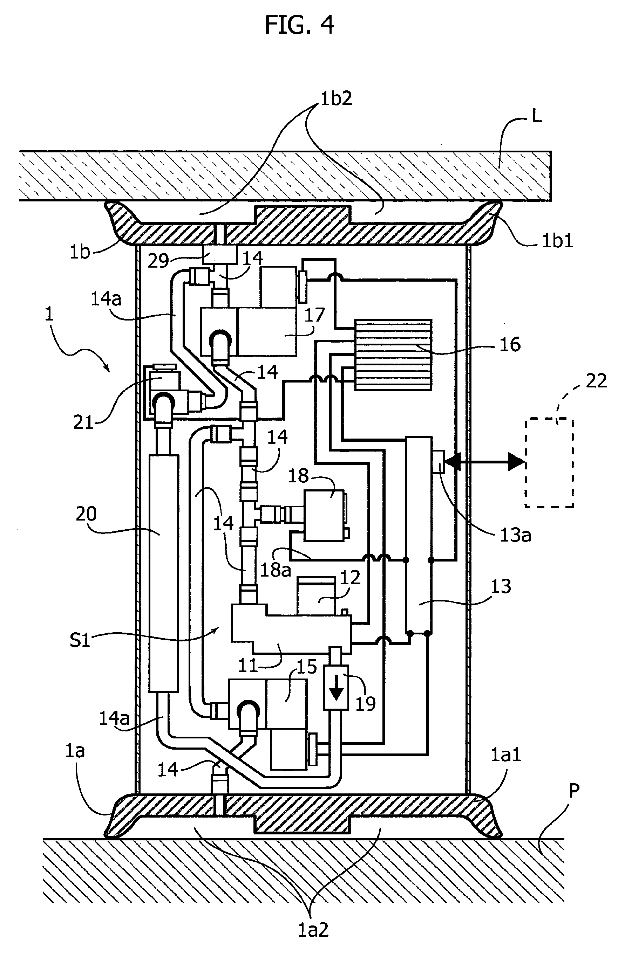

In the annexed drawings, Figures 3 and 4 illustrate two embodiments of a unit for supporting the plates that does not constitute the main subject of the invention, but is preferably provided in any case in the machine according to the invention, in addition to the units for locating the plates.

With reference to Figure 3, a unit 1 for supporting plates of glass comprises a body 1. At the bottom and top ends of this body 1, two suction-pad members are present, and in particular a bottom suction pad 1a and a top suction pad 1b. The suction pads 1a and 1b comprise, respectively, a first peripheral gasket 1a1 and a second peripheral gasket 1b1, which are carried by the body of the unit 1. The first gasket 1a1 defines a first closed chamber 1a2 between the bottom surface of the body 1 and the working surface P, whereas the second gasket 1b1 defines a second closed chamber 1b2 between the top surface of the body 1 and the plate to be machined L.

The two chambers 1a2 and 1b2 can be connected to a source of vacuum S1 to obtain anchorage, respectively, of the unit 1 to the working surface P and of the plate to be machined L to the unit 1.

In the embodiment illustrated in Figures 3-6, the source of vacuum S1 is provided within the body of the unit 1. The source of vacuum S 1 comprises a pump 11 driven by an electric motor 12, for example an electric motor with 24-V supply. The electric motor 12 is controlled by an electronic control unit 13, which is also provided within the body 1 of the unit. In particular, the electronic unit 13 controls turning-on and turning-off of the aforesaid electric motor 12 of the source of vacuum S1.

Once again with reference to Figure 3, the source of vacuum S1 is connected to the aforesaid first chamber 1a2 of the bottom suction-pad member 1a by means of a duct 14 and to a first solenoid valve 15 controlled by the electronic unit 13.

The solenoid valve 15, by opening, is able to set in communication, through the duct 14, the source of vacuum S1 with the first closed chamber 1a2.

In particular, the electronic unit 13 is programmed for causing anchorage of the supporting unit 1 to the working surface P by activating, initially, the electric motor 12 of the source S1 and by opening the first solenoid valve 15 to communicate, through the duct 14, a vacuum to the first chamber 1a2, and by closing the first solenoid valve 15 so as to isolate the first chamber 1a2 at negative pressure, so that subsequently it is possible to de-activate the electric motor 12 without causing the vacuum to cease in the first chamber 1a2.

A first advantage as compared to conventional solutions of the type illustrated in Figures 1 and 2 is represented by energy saving. In known solutions, the source of vacuum S is constantly functioning, whereas in the case illustrated the source S1 is activated for the time necessary to create the vacuum and then, once the solenoid valve 15 has been closed, the source S1 can be de-activated.

Within the body 1 of the supporting unit an electric-supply battery 16 is provided. This battery 16 is connected to the source of vacuum S1, to the solenoid valve 15, and to the electronic control unit 13. Preferably, the battery 16 is of a rechargeable type. Otherwise, in an alternative embodiment (not illustrated) the supporting unit 1 is provided with means for connection to an external electric-supply source.

In the currently preferred embodiment illustrated, the supporting unit 1 comprises a single source of vacuum S1 provided in the body of the unit 1. The source of vacuum S1 is connected both to the first chamber 1a2 of the bottom suction-pad member 1a and to the second chamber 1b2 of the top suction-pad member 1b. As an alternative, it is possible to envisage providing two different sources of vacuum, the first connected to the first chamber 1a2 of the bottom suction-pad member 1a and the second connected to the second chamber 1b2 of the top suction-pad member 1b.

To return to the example illustrated in Figure 3, in which a single source of vacuum S1 is present, this source S1 is connected, via the aforesaid first solenoid valve 15, to the bottom suction-pad member 1a and, via a second solenoid valve 17, to the second chamber 1b2 of the top suction-pad member 1b.

The first solenoid valve 15 and the second solenoid valve 17 are controlled independently by the electronic control unit 13 provided in the body of the unit 1.

Once again in the case of the embodiment illustrated in Figure 3, the suction-pad supporting unit 1 moreover comprises also a sensor 18 for detecting the vacuum generated by the source of vacuum S1. The sensor 18 sends, via a communication line 18a, a signal to the electronic control unit 13 for governing start or arrest of the motor 12 of the source of vacuum S1. As soon as the degree of vacuum set is reached, the sensor will communicate to the control unit 13 this information, and the control unit will close the solenoid valves 15 and 17 and then will switch off the motor 12. The sensor 18 will be moreover able to detect a drop in the level of vacuum and to signal (once again by means of the communication line 18a) to the control unit 13 the need to re-activate the source of vacuum S1.

In the embodiment of Figure 4, the source of vacuum S1 may be switched to an operating mode in which it operates as pressure source in order to generate a flow of pressurized air that can be used for favouring detachment of the plate L from the top suction-pad member 1b

In this case, also a third solenoid valve 21 is present for connecting the second closed chamber 1b2 to the source S1 in the mode where it is functioning as pressure source. The third solenoid valve 21 is connected to the pressure source S1 by means of a duct 14a interposed in which is a pressurized-air tank 20. Moreover interposed in the aforesaid duct 14a is a non-return valve 19 that allows the flow only in the direction of the second closed chamber 1b2.

The electronic control unit 13 provided within the body 1 is configured to communicate by wireless transmission means 13a with an external electronic unit 22 for control of all the supporting units 1 and/or locating units 2 associated to the machine M. The electronic control unit 13 is remotely controlled, for example, with radio-frequency modalities (Wi-Fi, Bluetooth, etc.), by the external unit 22. As an alternative to the radio-frequency mode or equivalents, the communication may take place even in wired mode (solution not illustrated).

The supporting unit 1 comprises in the above duct 14 between the second solenoid valve 17 and the second closed chamber 1b2 a valve 29 that allows flow of air from and to the second closed chamber 1b2 and prevents flow of water and debris towards the source of vacuum S1.

The valve is preferably of the type illustrated in a European patent application filed in the name of the present applicant simultaneously with the present application and will be equipped with a duct for causing outflow of the water and sediments gathered outside the body of the supporting unit 1.

The above valve serves to safeguard the pump of the source of vacuum from the water used for machining purposes (in the case where materials are machined with the aid of water) and from the sediments produced during the abrasive action.

In fact, the current state of the art envisages that, during the action of vacuum pressure, in the duct there passes a small amount of water and machining sediments, which, during the step of unloading of the piece that has already been machined, drop onto the top suction pad. The pump of the source of vacuum is sensitive in regard to water and to the machining sediments. Hence, the presence of the valve 29 serves to prevent the water and sediments from entering the intake duct and reaching the pump. The valve 29 will consequently be able to discharge water and sediments that drop into the area of the second closed chamber 1b2 outside the unit 1 by means of a discharge duct, not illustrated in the figures.

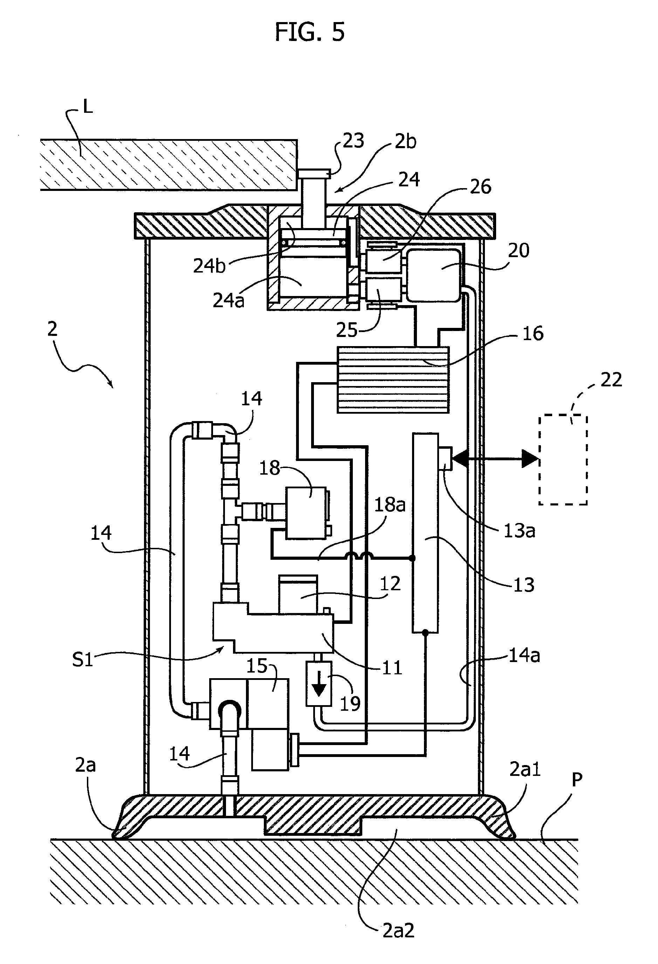

Figure 5 is a schematic representation of a unit 2 according to the invention, used for locating the plate L on the working surface P of the machine M.

In the sequel of the description the parts common to the supporting unit 1 will be designated with the same reference numbers also in the locating unit 2.

The locating unit 2 comprises a top locator member 23, which is vertically mobile between a raised, operative, position and a lowered, inoperative, position. The top locator member 23 is controlled by a pneumatic actuator 24 comprising two operating chambers 24a and 24b that can be selectively connected to a pressure source. The pressure source is constituted by the aforesaid source of vacuum S1, which, also in this case, is switchable to an operating mode in which it operates as pressure source.

The two operating chambers 24a and 24b of the actuator 24 are connected to the pressure source S1 by means of two respective solenoid valves 25 and 26. Furthermore, interposed in the connection between the source S1 and the actuator 24 is a compressed-air tank 20.

Also in this type of unit 2, a sensor 18 is present for detecting the vacuum generated by the source of vacuum S1, which is designed to send a signal on a communication line 18a to the electronic control unit 13. In the embodiment illustrated in Figure 5, the locating unit 2 also comprises a non-return valve 19, which allows flow only in the direction of the operating chambers 24a and 24b.

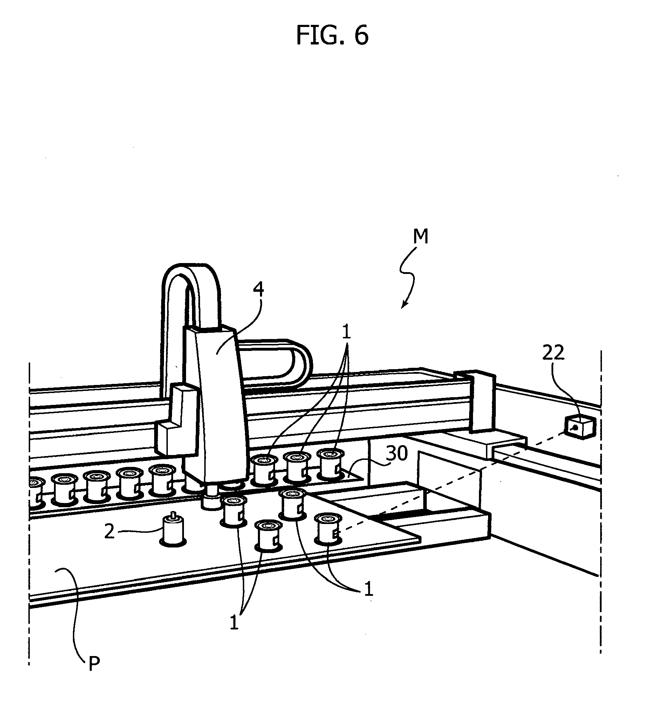

Figure 6 illustrates, instead, a machine M for machining plates of glass, marble, stone, wood, wood derivatives, or the like, which comprises as standard equipment a plurality of supporting units 1 and a plurality of locating units 2. The machine M illustrated has a battery-charger station 30, where there can be positioned both the supporting units 1 and the locating units 2 so that they can be recharged. According to a first embodiment, the units 1 and 2 are positioned manually in the battery-charger station 30. According to the embodiment illustrated, the machining head 4 of the machine positions the aforesaid supporting units 1 and/or locating units 2 on the workbench P in an operating mode and/or in stand-by mode in a battery-charger station 30, in effect automating these operations.

Of course, without prejudice to the principle of the invention, the details of construction and the embodiments may vary widely with respect to what has been described and illustrated herein purely by way of example, without thereby departing from the scope of the present invention, as defined by the claims.

## Claims

1. A unit (2) for locating in position plates (L) of glass, marble, stone, wood, wood derivatives, or the like, on the working surface (P) of a machine (M) for machining said plates (L), said unit (2) comprising:
- a bottom suction-pad member (2a) for anchorage of said unit (2) to the working surface (P), said bottom suction-pad member (2a) comprising a peripheral gasket (2a1) carried by the body (2) of said unit and designed to delimit a bottom closed chamber (2a2) between the bottom surface of said body (2) and the working surface (P), said bottom closed chamber (2a2) being connectable to a source of vacuum (S1) to obtain anchorage of said unit (2) to said working surface (P); and
- a top locator member (23), which is vertically mobile between a raised, operative, position and a lowered, inoperative, position, said top locator member (23) being controlled by a pneumatic actuator (24) comprising at least one operating chamber (24a), which can be connected to a pressure source,
said unit being **characterized in that**:
said source of vacuum (S1) is provided within the body (1, 2) of said unit, and comprises a pump (11) driven by an electric motor (12),
said electric motor (12) is controlled by an electronic control unit (13) provided within said body (1, 2),
said pump (11) of said source of vacuum (S1) can be connected to the aforesaid bottom chamber (2a2) by means of a first solenoid valve (15) controlled by said electronic control unit (13), and
said pressure source is constituted by the aforesaid source of vacuum (S1), the latter being switchable to an operating mode in which it operates as pressure source,
said electronic control unit (13) being programmed for causing anchorage of said unit (2) to said working surface (P) by initially activating said electric motor (12) and opening said first solenoid valve (15) to supply a vacuum to said bottom chamber (2a2), and for closing said first solenoid valve (15) so as to isolate said bottom chamber (2a2) at negative pressure, in order to be able subsequently to de-activate the electric motor (12) without causing the vacuum in said chamber (2a2) to cease.

2. The unit according to Claim 1, **characterized in that** within said body (2) an electric-supply battery (16) is provided.

3. The unit according to Claim 2, **characterized in that** said battery (16) is of a rechargeable type.

4. The unit according to any one of Claim 1, **characterized in that** it is provided with means for connection to an external electric-supply source.

5. The unit according to any one of Claims 1 to 4, **characterized in that** said source (S1) can be connected to said at least one operating chamber (24a) of said actuator (24) by means of a respective solenoid valve (25, 26).

6. The unit according to Claim 5, **characterized in that** said actuator (24) comprises two operating chambers (24a, 24b), which can be connected to said source (S1) by means of two respective solenoid valves (25, 26).

7. The unit according to Claim 5 or Claim 6, **characterized in that** interposed in the connection between the source (S1) and said actuator (24) is a compressed-air tank (20).

8. The unit according to Claim 7, **characterized in that** it comprises sensor means (18) for detecting the vacuum generated by said source of vacuum (S1), which are designed to send a signal to said electronic control unit (13).

9. The unit according to Claim 7 or Claim 8, **characterized in that** in said connection between the source (S1) and said actuator (24) a non-return valve (19) is moreover interposed, which allows flow only in the direction of said operating chamber (24a, 24b).

10. A machine for machining plates of glass, marble, stone, wood, wood derivatives, or the like, **characterized in that** it comprises one or more units (2) for locating said plates (L) in position according to any one of the preceding claims.

11. The machine according to Claim 10, **characterized in that** it further comprises one or more units (1) for supporting the plates on the working surface, each of said supporting units (1) being designed to support and withhold a plate (L) on the working surface (P), each supporting unit (1) comprising bottom and top suction-pad members (1a, 1b) for anchorage of said plate (L) on said unit (1), each suction-pad member (1a, 1b) comprising a peripheral gasket (1a1, 1b1) carried by the body (1) of said unit and designed to delimit a chamber (1a2, 1b2), which can be connected to a source of vacuum (S1) to obtain anchorage of said plate (L) to said unit (1).

12. The machine according to Claim 11, **characterized in that** each supporting unit (1) comprises a single source of vacuum (S1) provided in the body (1) of said unit, which can be connected both to said chamber (1a2) of said bottom suction-pad member (1a) and to said chamber (1b2) of said top suction-pad member (1b).

13. The machine according to Claim 12, **characterized in that** said single source of vacuum (S1) of each supporting unit (1) can be connected to the aforesaid chambers (1a2, 1b2) of the bottom and top suction-pad members (1a, 1b) by means of a first solenoid valve (15) and a second solenoid valve (17), respectively.

14. The machine according to Claim 13, **characterized in that** said first solenoid valve (15) and said second solenoid valve (17) of each supporting unit (1) are controlled independently by said electronic control unit (13) provided in said body (1).

15. The machine according to any one of Claims 11 to 14, **characterized in that** said source of vacuum (S1) of each supporting unit (1) is provided for being switched to an operating mode in which it operates as pressure source in order to generate a flow of pressurized air that can be used for favouring detachment of said plate (L) from said top suction-pad member (1b).

16. The machine according to Claim 15, **characterized in that** each supporting unit (1) comprises a third solenoid valve (21) for connecting said top closed chamber (1b2) to said source of vacuum (S1) in the mode where it functions as pressure source.

17. The machine according to Claim 16, **characterized in that** in each supporting unit (1) said third solenoid valve (21) is connected to said source (S1) by means of a duct (14a), interposed in which is a pressurized-air tank (20).

18. The machine according to Claim 17, **characterized in that** moreover interposed in said duct (14a) of each supporting unit (1) is a non-return valve (19), which allows the flow only in the direction of said top closed chamber (1b2).

19. The machine according to Claim 10 or Claim 11, **characterized in that** said electronic control unit (13) provided within said body (1, 2) of each locating unit (2) and/or of each supporting unit (1) is configured to communicate by wireless transmission means (13a) with an external electronic unit (22) for control of all the supporting units (1) and/or locating units (2) associated to the machine (M).

## Patentansprüche

1. Einheit (2) zur Positionierung von Platten (L) aus Glas, Marmor, Stein, Holz, Holzderivaten oder dergleichen auf der Arbeitsfläche (P) einer Maschine (M) zur Bearbeitung dieser Platten (L), wobei die Einheit (2) umfasst:
- ein unteres Sauggreiferelement (2a) zur Verankerung der Einheit (2) an der Arbeitsfläche (P), wobei das untere Sauggreiferelement (2a) eine periphere Flachdichtung (2a1) umfasst, die durch den Körper (2) der Einheit getragen wird und so ausgestaltet ist, dass sie einen unteren geschlossenen Raum (2a2) zwischen der unteren Oberfläche des Körpers (2) und der Arbeitsfläche (P) begrenzt, wobei der untere geschlossene Raum (2a2) mit einer Vakuumquelle (S1) verbindbar ist, um eine Verankerung der Einheit (2) an der Arbeitsfläche (P) zu erreichen; und
- ein oberes Positionierungselement (23), das zwischen einer angehobenen, betriebsfähigen Position und einer abgesenkten, nicht betriebsfähigen Position vertikal beweglich ist, wobei das obere Positionierungselement (23) durch einen pneumatischen Aktuator (24) gesteuert wird, der wenigstens einen Betriebsraum (24a) umfasst, der mit einer Druckquelle verbunden sein kann,
wobei die Einheit **dadurch gekennzeichnet ist, dass**
die Vakuumquelle (S1) innerhalb des Körpers (1, 2) der Einheit vorgesehen ist und eine durch einen Elektromotor (12) angetriebene Pumpe (11) umfasst,
der Elektromotor (12) durch eine innerhalb des Körpers (1, 2) bereitgestellte elektronische Steuereinheit (13) gesteuert wird,
die Pumpe (11) der Vakuumquelle (S1) über ein durch die elektronische Steuereinheit (13) gesteuertes erstes Magnetventil (15) mit dem vorgenannten unteren Raum (2a2) verbunden sein kann und
die Druckquelle durch die vorgenannte Vakuumquelle (S1) ausgebildet ist, wobei die Letztgenannte in einen Betriebmodus schaltbar ist, in dem sie als Druckquelle arbeitet,
wobei die elektronische Steuereinheit (13) so programmiert ist, dass sie die Verankerung der Einheit (2) an der Arbeitsfläche (P) bewirkt, indem sie zunächst den Elektromotor (12) aktiviert und das erste Magnetventil (15) öffnet, um den unteren Raum (2a2) mit einem Vakuum zu beaufschlagen, und dann das erste Magnetventil (15) schließt, um den unteren Raum (2a2) bei Unterdruck zu isolieren, um nachfolgend den Elektromotor (12) deaktivieren zu können, ohne einen Abfall des Vakuums in dem Raum (2a2) zu bewirken.

2. Einheit nach Anspruch 1, **dadurch gekennzeichnet, dass** innerhalb des Körpers (2) eine Elektroversorgungsbatterie (16) vorgesehen ist.

3. Einheit nach Anspruch 2, **dadurch gekennzeichnet, dass** die Batterie (16) wiederaufladbar ist.

4. Einheit nach einem der Ansprüche 1, **dadurch gekennzeichnet, dass** sie mit Mitteln zur Verbindung mit einer externen Elektroversorgungsquelle versehen ist.

5. Einheit nach einem der Ansprüche 1 bis 4, **dadurch gekennzeichnet, dass** die Quelle (S1) über ein jeweiliges Magnetventil (25, 26) mit dem wenigstens einen Betriebsraum (24a) des Aktuators (24) verbunden sein kann.

6. Einheit nach Anspruch 5, **dadurch gekennzeichnet, dass** der Aktuator (24) zwei Betriebsräume (24a, 24b) umfasst, die über zwei jeweilige Magnetventile (25, 26) mit der Quelle (S1) verbunden sein können.

7. Einheit nach Anspruch 5 oder Anspruch 6, **dadurch gekennzeichnet, dass** in der Verbindung zwischen der Quelle (S1) und dem Aktuator (24) ein Druckluftbehälter (20) angeordnet ist.

8. Einheit nach Anspruch 7, **dadurch gekennzeichnet, dass** sie Sensormittel (18) zur Erfassung des durch die Vakuumquelle (S1) erzeugten Vakuums umfasst, die so ausgestaltet sind, dass sie ein Signal an die elektronische Steuereinheit (13) senden.

9. Einheit nach Anspruch 7 oder Anspruch 8, **dadurch gekennzeichnet, dass** in der Verbindung zwischen der Quelle (S1) und dem Aktuator (24) außerdem ein Rückschlagventil (19) angeordnet ist, das Durchfluss nur in der Richtung des Betriebsraums (24a, 24b) erlaubt.

10. Maschine zur Bearbeitung von Platten aus Glas, Marmor, Stein, Holz, Holzderivaten oder dergleichen, **dadurch gekennzeichnet, dass** sie eine oder mehrere Einheit(en) (2) zur Positionierung dieser Platten (L) nach einem der vorangehenden Ansprüche umfasst.

11. Maschine nach Anspruch 10, **dadurch gekennzeichnet, dass** sie weiterhin eine oder mehrere Einheit(en) (1) zum Tragen der Platten auf der Arbeitsfläche umfasst, wobei jede der Trageeinheiten (1) so ausgestaltet ist, dass sie eine Platte (L) auf der Arbeitsplatte (P) trägt und hält, wobei jede Trageeinheit (1) untere und obere Sauggreiferelemente (1a, 1b) zur Verankerung der Platte (L) auf der Einheit (1) umfasst, wobei jedes Sauggreiferelement (1a, 1b) eine periphere Flachdichtung (1a1, 1b1) umfasst, die durch den Körper (1) der Einheit getragen wird und so ausgestaltet ist, dass sie einen Raum (1a2, 1b2) begrenzt, der mit einer Vakuumquelle (S1) verbunden sein kann, um eine Verankerung der Platte (L) an der Einheit (1) zu erreichen.

12. Maschine nach Anspruch 11, **dadurch gekennzeichnet, dass** jede Trageeinheit (1) eine einzige, im Körper (1) der Einheit vorgesehene Vakuumquelle (S1) umfasst, die sowohl mit dem Raum (1a2) des unteren Sauggreiferelements (1a) als auch mit dem Raum (1b2) des oberen Sauggreiferelements (1b) verbunden sein kann.

13. Maschine nach Anspruch 12, **dadurch gekennzeichnet, dass** die einzige Vakuumquelle (S1) jeder Trageeinheit (1) über ein erstes Magnetventil (15) bzw. ein zweites Magnetventil (17) mit den vorgenannten Räumen (1a2, 1b2) des unteren und oberen Sauggreiferelements (1a, 1b) verbunden sein kann.

14. Maschine nach Anspruch 13, **dadurch gekennzeichnet, dass** das erste Magnetventil (15) und das zweite Magnetventil (17) jeder Trageeinheit (1) unabhängig voneinander durch die im Körper (1) vorgesehene elektronische Steuereinheit (13) gesteuert werden.

15. Maschine nach einem der Ansprüche 11 bis 14, **dadurch gekennzeichnet, dass** die Vakuumquelle (S1) jeder Trageeinheit (1) vorgesehen ist, um in einen Betriebsmodus geschaltet zu werden, in dem sie als Druckquelle arbeitet, um einen Druckluftstrom zu erzeugen, der zur Unterstützung der Lösung der Platte (L) vom oberen Sauggreiferelement (1b) verwendet werden kann.

16. Maschine nach Anspruch 15, **dadurch gekennzeichnet, dass** jede Trageeinheit (1) ein drittes Magnetventil (21) umfasst, um in dem Modus, in dem sie als Druckquelle fungiert, den oberen geschlossenen Raum (1b2) mit der Vakuumquelle (S1) zu verbinden.

17. Maschine nach Anspruch 16, **dadurch gekennzeichnet, dass** in jeder Trageeinheit (1) das dritte Magnetventil (21) über eine Leitung (14a), in der ein Druckluftbehälter (20) angeordnet ist, mit der Quelle (S1) verbunden ist.

18. Maschine nach Anspruch 17, **dadurch gekennzeichnet, dass** in der Leitung (14a) jeder Trageeinheit (1) außerdem ein Rückschlagventil (19) angeordnet ist, das den Durchfluss nur in der Richtung des oberen geschlossenen Raums (1b2) erlaubt.

19. Maschine nach Anspruch 10 oder Anspruch 11, **dadurch gekennzeichnet, dass** die innerhalb des Körpers (1, 2) jeder Positionierungseinheit (2) und/oder jeder Trageeinheit (1) vorgesehene elektronische Steuereinheit (13) so ausgestaltet ist, dass sie über drahtlose Übertragungsmittel (13a) mit einer externen elektronischen Einheit (22) zur Steuerung aller der Maschine (M) zugeordneten Trageeinheiten (1) und/oder Positionierungseinheiten (2) kommuniziert.

## Revendications

1. Unité (2) pour mettre en place des plaques (L) de verre, de marbre, de pierre, de bois, de dérivés de bois ou analogue, sur la surface de travail (P) d'une machine (M) pour l'usinage desdites plaques (L), ladite unité (2) comprenant :
- un élément de ventouse inférieur (2a) pour l'ancrage de ladite unité (2) sur la surface de travail (P), ledit élément de ventouse inférieur (2a) comprenant un joint d'étanchéité périphérique (2a1) porté par le corps (2) de ladite unité et conçu pour délimiter une chambre fermée inférieure (2a2) entre la surface inférieure dudit corps (2) et la surface de travail (P), ladite chambre fermée inférieure (2a2) pouvant être reliée à une source de vide (S1) pour obtenir un ancrage de ladite unité (2) sur ladite surface de travail (P) ; et
- un élément de positionnement supérieur (23), qui est mobile verticalement entre une position surélevée opérationnelle et une position abaissée non opérationnelle, ledit élément de positionnement supérieur (23) étant commandé par un actionneur pneumatique (24) comprenant au moins une chambre de fonctionnement (24a), qui peut être reliée à une source de pression,
ladite unité étant **caractérisée en ce que** :
ladite source de vide (S1) est prévue à l'intérieur du corps (1, 2) de ladite unité, et comprend une pompe (11) entraînée par un moteur électrique (12),
ledit moteur électrique (12) est commandé par une unité de commande électronique (13) prévue à l'intérieur dudit corps (1, 2),
ladite pompe (11) de ladite source de vide (S1) peut être reliée à la chambre inférieure précitée (2a2) au moyen d'une première électrovanne (15) commandée par ladite unité de commande électronique (13), et
ladite source de pression est constituée par la source de vide (S1) précitée, cette dernière pouvant commuter vers un mode de fonctionnement dans lequel elle fonctionne en tant que source de pression,
ladite unité de commande électronique (13) étant programmée pour provoquer l'ancrage de ladite unité (2) sur ladite surface de travail (P) en activant initialement ledit moteur électrique (12) et en ouvrant ladite première électrovanne (15) pour créer un vide dans ladite chambre inférieure (2a2), et pour fermer ladite première électrovanne (15) de manière à isoler ladite chambre inférieure (2a2) à une pression négative, afin de pouvoir ensuite désactiver le moteur électrique (12) sans interrompre le vide dans ladite chambre (2a2).

2. Unité selon la revendication 1, **caractérisée en ce qu'**une batterie d'alimentation électrique (16) est prévue à l'intérieur dudit corps (2).

3. Unité selon la revendication 2, **caractérisée en ce que** ladite batterie (16) est de type rechargeable.

4. Unité selon la revendication 1, **caractérisée en ce qu'**elle est pourvue d'un moyen pour une connexion à une source d'alimentation électrique externe.

5. Unité selon l'une quelconque des revendications 1 à 4, **caractérisée en ce que** ladite source (S1) peut être reliée à ladite au moins une chambre de fonctionnement (24a) dudit actionneur (24) au moyen d'une électrovanne respective (25, 26).

6. Unité selon la revendication 5, **caractérisée en ce que** ledit actionneur (24) comprend deux chambres de fonctionnement (24a, 24b), qui peuvent être reliées à ladite source (S1) au moyen de deux électrovannes respectives (25, 26).

7. Unité selon la revendication 5 ou 6, **caractérisée en ce qu'**un réservoir d'air comprimé (20) est interposé dans la connexion entre la source (S1) et ledit actionneur (24).

8. Unité selon la revendication 7, **caractérisée en ce qu'**elle comprend un moyen de capteur (18) pour la détection du vide généré par ladite source de vide (S1), qui est conçu pour envoyer un signal à ladite unité de commande électronique (13).

9. Unité selon la revendication 7 ou 8, **caractérisée en ce que**, dans ladite connexion entre la source (S1) et ledit actionneur (24), une soupape de non-retour (19) est de plus interposée, qui permet l'écoulement uniquement dans la direction de ladite chambre de fonctionnement (24a, 24b).

10. Machine pour l'usinage des plaques de verre, de marbre, de pierre, de bois, de dérivés de bois ou analogue, **caractérisée en ce qu'**elle comprend une ou plusieurs unité(s) (2) pour mettre lesdites plaques (L) en place selon l'une quelconque des revendications précédentes.

11. Machine selon la revendication 10, **caractérisée en ce qu'**elle comprend en outre une ou plusieurs unité(s) (1) pour le support des plaques sur la surface de travail, chacune desdites unités de support (1) étant conçue pour supporter et retenir une plaque (L) sur la surface de travail (P), chaque unité de support (1) comprenant des éléments de ventouse inférieur et supérieur (1a, 1b) pour l'ancrage de ladite plaque (L) sur ladite unité (1), chaque élément de ventouse (1a, 1b) comprenant un joint d'étanchéité périphérique (1a1, 1b1) porté par le corps (1) de ladite unité et conçu pour délimiter une chambre (1a2, 1 b2) qui peut être reliée à une source de vide (S1) pour obtenir un ancrage de ladite plaque (L) sur ladite unité (1).

12. Machine selon la revendication 11, **caractérisée en ce que** chaque unité de support (1) comprend une source unique de vide (S1) prévue dans le corps (1) de ladite unité, qui peut être reliée à la fois à ladite chambre (1a2) dudit élément de ventouse inférieur (1a) et à ladite chambre (1 b2) dudit élément de ventouse supérieur (1 b).

13. Machine selon la revendication 12, **caractérisée en ce que** ladite source unique de vide (S1) de chaque unité de support (1) peut être reliée aux chambres précitées (1 a2, 1 b2) des éléments de ventouse inférieur et supérieur (1a, 1b) au moyen d'une première électrovanne (15) et d'une deuxième électrovanne (17), respectivement.

14. Machine selon la revendication 13, **caractérisée en ce que** ladite première électrovanne (15) et ladite deuxième électrovanne (17) de chaque unité de support (1) sont commandées de manière indépendante par ladite unité de commande électronique (13) prévue dans ledit corps (1).

15. Machine selon l'une quelconque des revendications 11 à 14, **caractérisée en ce que** ladite source de vide (S1) de chaque unité de support (1) est prévue pour être commutée vers un mode de fonctionnement dans lequel elle fonctionne en tant que source de pression afin de générer un flux d'air sous pression qui peut être utilisé pour favoriser le détachement de ladite plaque (L) dudit élément de ventouse supérieur (1 b).

16. Machine selon la revendication 15, **caractérisée en ce que** chaque unité de support (1) comprend une troisième électrovanne (21) pour relier ladite chambre fermée supérieure (1 b2) à ladite source de vide (S1) dans le mode où elle fonctionne en tant que source de pression.

17. Machine selon la revendication 16, **caractérisée en ce que** dans chaque unité de support (1) ladite troisième électrovanne (21) est reliée à ladite source (S1) au moyen d'un conduit (14a) dans lequel un réservoir d'air sous pression (20) est interposé.

18. Machine selon la revendication 17, **caractérisée en ce que** une soupape de non-retour (19) est en outre interposée dans ledit conduit (14a) de chaque unité de support (1), qui permet l'écoulement uniquement dans la direction de ladite chambre fermée supérieure (1 b2).

19. Machine selon la revendication 10 ou 11, **caractérisée en ce que** ladite unité de commande électronique (13) prévue à l'intérieur dudit corps (1, 2) de chaque unité de positionnement (2) et/ou de chaque unité de support (1) est configurée pour communiquer par un moyen de transmission sans fil (13a) avec une unité électronique externe (22) pour la commande de toutes les unités de support (1) et/ou les unités de positionnement (2) associées à la machine (M).
